# EUROPÄISCHE PATENTANMELDUNG

(11) **EP 2 562 324 A1**
(43) Veröffentlichungstag der Anmeldung: **27.02.2013**
(21) Anmeldenummer: 12181647.4
(22) Anmeldetag: 24.08.2012
(51) Int. Cl.: E04C 2/296, B32B 37/12, B29C 65/48, B32B 5/18, B32B 25/14, B32B 27/30

(54) **Verbundwerkstoffplatte zur Herstellung von Rahmenverbreiterungen an Fenstern und Türen oder zum Einsatz als Leicht-Bauplatte bestehend aus einem Kern aus einer Schaumstoffplatte aus Polyethylenterephthalat sowie beidseitigen Deckschichten und ein Verfahren zu deren Herstellung**

(30) Priorität: 25.08.2011 CH 13922011
(71) Anmelder: Tavapan SA, 2710 Tavannes (CH)
(72) Erfinder: Zürcher, Walter, 2605 Sonceboz-Sombeval (CH)
(74) Vertreter: Rentsch Partner AG

(57) **Zusammenfassung**

Die Erfindung betrifft eine Verbundwerkstoffplatte (7) zur Herstellung von Rahmenverbreiterungen an Fenstern und Türen umfassend einen Kern (1) sowie wenigstens eine erste Deckschicht auf einer ersten Seite (3) und eine zweite Deckschicht auf einer zweiten Seite (3) sowie ein Verfahren zur Herstellung einer solchen Platte. Der Kern besteht aus einer weitgehend geschlossenzellige Polyethylenterephthalat-Schaumplatte.

## Beschreibung

### ERFINDUNGSGEBIET

Die Erfindung betrifft eine Verbundwerkstoffpatte zum Einsatz als Rahmenverbreiterung an Fenstern, Türen oder ähnlichen Bauelementen mit hoher Wärmedämmung nach dem Oberbegriff des Anspruchs 1 sowie spezielle Verfahren zu dessen Herstellung.

Unter den Bereich der Erfindung fällt zudem der Einsatz der Verbundwerkstoffplatte als Leichtbauplatte im Innen- und Aussenbereich sowie ein Verfahren zur Herstellung der Verbundwerkstoffplatte.

### HINTERGRUND DER ERFINDUNG

Beim Einbau von Bauelementen wie Fenstern, Türen oder ähnlichem in Fassaden und andere Gebäudeteile werden heute vorwiegend Platten aus Holzwerkstoffen eingesetzt. Diese bestehen meist aus Spanplatten oder Faserplatten, zwischen denen Isolierschichten aus verschiedenen Werkstoffen angeordnet sind. Meist werden Schäume aus Polyurethanen (PUR) o.ä. genutzt, die vollflächig oder unter Verwendung von Zwischenstegen aus Holzwerkstoffen verklebt werden. Zur Oberflächenvergütung werden diese Platten teilweise mit Grundierfolien, Kunststoffen, Metallschichten, Furnier o.ä. beschichtet.

Dadurch entstehen Platten, die ausreichende Stabilität und eine bessere Wärmedämmung als reine Holzwerkstoffplatten besitzen. Entsprechende Platten werden teilweise auch Fassadenplatten genannt.

Die Dicke dieser Platten schwankt je nach angeschlossenen Bauelementen meist zwischen 45 und 85 mm. Diese Dicke ist durch die Einbautiefe der anschliessenden Bauelemente bestimmt und kann nicht beliebig verändert werden. Dabei enthalten diese Platten eine Isolierschicht von ca. 20 bis 60 mm. Diese eher niedrigen Dicken der Isolationsschichten resultieren unter anderem aus den bescheidenen mechanischen Eigenschaften der verwendeten Materialien, die den Einsatz relativ dicker Deckschichten notwendig machen.

Die Wärmedämmwirkung dieser Platten ist bei den heutigen Anforderungen an den baulichen Wärmeschutz ungenügend.

Zudem ist insbesondere die Verwendung von PUR aus ökologischer Sicht zusätzlich problematisch, da für PUR bisher keine gut funktionierenden Systeme zur Wiederverwertung (Recycling) existieren. Es kann also weder bei der Herstellung solcher aus dem Stand der Technik bekannten Verbundwerkstoffplatten, noch bei deren Entsorgung von solchen Recyclingsystemen Gebrauch gemacht werden, was sowohl ökologisch als auch ökonomisch problematisch ist.

Die Verbindung der heute genutzten Platten mit den Bauelementen und dem Bauanschluss erfolgt überwiegend durch Schrauben.

Die verwendeten Holzwerkstoffplatten haben eine ungenügende Feuchtebeständigkeit. Bereits schon durch einmaliges Befeuchten z.B. während der Montage oder in der sonstigen Handhabung bei Transport in der Bauphase, können die Platten Feuchtigkeit aufnehmen, was zu einem irreversiblen Quellen der Platten, dem Gefrieren der durchfeuchteten Platten bei tiefen Temperaturen und damit zu ihrer Zerstörung führt. Insbesondere wechselnde klimatische Einflüsse, wie Frost-Tau-Zyklen, stellen deshalb eine grosse Belastung für die aus dem Stand der Technik bekannten Fassadenplatten dar.

Die Verbindung dieser herkömmlichen Fassadenplatten aus Holzwerkstoffen mit Bauelementen aus Kunststoff führt ausserdem zu ungewünschtem Materialmix in der Fassadengestaltung, was zu Problemen bei der Farbgestaltung und der Erhaltung der Bauhülle in deren Lebenszeit führt.

Die Herstellung der Fassadenplatten erfolgt heute meist in diskontinuierlichen Prozessen, bei denen die Schichten manuell auf vorbeleimte Holzwerkstoffplatten gelegt werden und dann in einem diskontinuierlichen Pressprozess meist kalt verklebt werden. Dabei entsprechen die verklebten Schichten den Schichten der Fassadenplatten. Die dazu notwendigen manuellen Verfahrensschritte und relativ langen Taktzeiten machen die Herstellung der aus dem Stand der Technik bekannten Platten teuer.

### ZUSAMMENFASSUNG DER ERFINDUNG

Die Aufgabe der Erfindung besteht darin, eine Verbundwerkstoffplatte zu beschreiben, die bei gleicher Plattendicke wesentlich bessere Eigenschaften als die aus dem Stand der Technik bekannten Platten besitzt und sich mit geringem Aufwand herstellen lässt.

Gemäss der vorliegenden Erfindung wird ein wärmeisolierender Kern mit dem Deckmaterial der anschliessenden Bauelemente beschichtet, wobei diese Materialkombination durch weitere funktionelle Schichten ergänzt werden kann. Die Deckschichten auf dem Kern einer erfindungsgemässen Verbundwerkstoffplatte können also jeweils aus mehreren funktionalen Schichten bestehen. Vorteilhafterweise wird als wärmeisolierender Kern eine Polyethylenterephthalat-Schaumplatte (PET-Schaumplatte) o.ä. eingesetzt, die weitgehend geschlossenzellig ist. Geschlossenzellig, oder auch geschlossenporig, bedeutet, dass die Zellen oder Poren des Schaums abgeschlossen sind und somit nicht interkonnektieren. Bei einer weitgehend geschlossenzelligen Schaumplatte ist die Mehrheit der Zellen abgeschlossen, jedoch können einzelne Zellen interkonnektieren und insbesondere Zellen an der Oberfläche der Schaumplatte nach aussen geöffnet sein. Die Dicke des Kerns liegt bei der erfindungsgemässen Verbundwerkstoffplatte zwischen 10 und 100 mm, vorzugsweise zwischen 40 und 100mm und die Dichte zwischen 40 und 100 kg/m³, was zu ausreichenden Dämmeigenschaften führt. Für die Herstellung, wie auch die spätere Entsorgung, des Kerns kann aufgrund der Verwendung von PET im Gegensatz zu den aus dem Stand der Technik bekannten Kernmaterialien auf ein Ausgangsmaterial zurückgegriffen werden, das sich ökonomisch und ökologisch gut wiederverwerten lässt. Für PET existieren denn auch bereits vielerorts effiziente Recyclingsysteme, insbesondere in Verbindung mit Einweg-Getränkeflaschen. Für die Herstellung einer erfindungsgemässen Verbundwerkstoffplatte kann auch wiederverwertetes PET verwendet werden, das etwa aufgrund seiner Farbe oder enthaltener leichter Verunreinigungen für andere Anwendungen nicht mehr geeignet ist.

Als Deckschichten werden vorteilhafterweise für die Kombination mit den verbreiteten Kunststofffenstern Polyvinylchlorid-Platten (PVC-Platten) eingesetzt. Diese PVC-Platten geben den erfindungsgemässen Wärmeschutzplatten, respektive Verbundwerkstoffplatte, eine hohe Feuchtebeständigkeit und gleiche optische, haptische und Pflegeeigenschaften wie die Bauelemente selbst.

Für den Einsatz in Kombination mit Holz-Alu oder Metallfenstern kann die erfindungsgemässe Verbundwerkstoffplatte auch mit Aluminiumdeckschichten, anderen Metalldeckschichten oder Furnier ausgerüstet sein.

Als funktionale Schichten werden vorteilhafterweise z.B. schalldämmende Schichten aus massereichen Materialien wie z.B. Schwerfolie aus Ethylenvinylacetat (EVA) mit mineralischen Zusätzen eingesetzt.

Für die Verklebung der erfindungsgemässen Platten werden vorteilhafterweise vernetzende Schmelzklebstoffe eingesetzt, z.B. Polyurethan-Schmelzklebstoffe (PUR-Schmelzklebstoffe).

Auf Grund der eingesetzten Materialien und der beschriebenen Verklebung sind die erfindungsgemässen Platten resistent gegen Feuchtigkeitseinwirkung in der Plattenebene und in der Schmalfläche mit den Klebfugen. Das heisst insbesondere, dass sich Feuchtigkeit aufgrund des weitgehend geschlossenzelligen Kerns weder in Dickenrichtung der Platte, noch innerhalb einer Plattenebene auf schädigende Weise ausbreiten kann.

Die Herstellung der erfindungsgemässen Platten erfolgt vorteilhafterweise in einem kontinuierlichen Prozess, wobei der Schmelzklebstoff über Rollenbeleimmaschinen auf den Kern aufgetragen wird. Der Schmelzklebstoff wird also insbesondere mittels kontinuierliche Walzenbeleimung auf den Kern, wie auch auf andere Schichten aufgetragen. Die Auftragstemperatur liegt dabei zwischen 100 und 160 °C bei einer Klebstoffauftragsmenge zwischen 70 und 200 g/m². Pro Klebstoffschicht können also zwischen 70 und 200 Gramm Klebstoff pro Quadratmeter Klebstofffläche aufgetragen werden. Das Verpressen der Schichten erfolgt dann ebenfalls in einem kontinuierlichen Prozess durch Rollpressen. Alternativ oder zusätzlich kann ein kurzer dickenbegrenzter Planpressvorgang genutzt werden, der eine Kalibrierung und Haftungserhöhung bewirkt. Auf diese Weise kann eine stabile Platte mit konstanter kalibrierter Dicke erzeugt werden.

Die Fertigung mittels eines kontinuierlichen Pressvorgangs ist insbesondere deshalb möglich, weil PET-Schaumplatten über eine ausreichende Steifigkeit und Festigkeit verfügen und zudem die Verwendung einer Vielzahl von Schmelzklebstoffen zulassen. Unter anderem können bei der kontinuierlichen Fertigung einer erfindungsgemässen Verbundwerkstoffplatte die Deckschichten mittels eines nachvernetzenden Schmelzklebstoffes mit dem PET-Schaumkern verklebt werden. Auf diese Weise kann eine unmittelbar nach dem Pressvorgang dimensionsstabile Platte erzeugt werden wodurch die Taktzeiten in der Presse reduziert werden können.

Zur Verbesserung der Verklebung und zur Verbesserung der Dickenkonstanz ist ein Kalibrierschliff des Kernmaterials vor dem Pressvorgang vorteilhaft.

Der Anschluss an die Bauelemente und an den Baukörper kann bei der erfindungsgemässen Verbundwerkstoffplatte durch Steckverbindungen erreicht werden, die einen sehr guten mechanischen und thermischen Anschluss gestatten. Durch die langzeitstabile Flexibilität der erfindungsgemässen Platte können Pressverbindungen realisiert werden, die bei geeigneter Tolerierung dauerhafte fugenlose Verbindungen ermöglichen.

Bei zusätzlichem Einsatz von geeigneten Klebstoffen kann durch die profilierte Pressverbindung ein dampfdichter Anschluss erreicht werden.

Die mechanischen Eigenschaften des geschlossenzelligen PET-Schaumes gestatten auch einen mechanischen Anschluss an Bauelemente mittels üblicher Montageschrauben ohne zusätzliche Einleimer, welche bei herkömmlichen Fensterrahmenverbreiterungen notwendig sind, da der Kern der erfindungsgemässen Verbundwerkstoffplatte einen genügend guten Schraubauszugwiderstand aufweist. Bei einer erfindungsgemässen Verbundwerkstoffplatte können Schrauben und ähnliche Verbindungselemente also mit genügendem Ausreisswiderstand unmittelbar im Kern der Platte verankert werden. Da Einleimer häufig auch als Wärmebrücken wirken erhöht sich bei deren Wegfallen auch der Isolationswert der Verbundwerkstoffplatten. Verbundwerkstoffplatten ohne Einleimer können zudem im Vergleich zu solchen mit Einleimern auch flexibler zugeschnitten und eingesetzt werden, da in letzteren die Einleimer meist nach den Anschlussstellen ausgerichtet sein müssen. Die optionale Verwendung von Einleimern ist bei einer erfindungsgemässen Verbundwerkstoffplatte jedoch weiterhin möglich.

Eine verwendete PET-Schaumplatte kann aus mehreren Schichten aufgebaut sein, wobei diese Schichten unterschiedliche Dicken wie auch Dichten aufweisen können. Insbesondere können jene Schichten der PET-Schaumplatte in den Bereichen in denen eine Montageschraube verankert werden oder eine Steckverbindung erfolgen soll höhere Dichten aufweisen als jene, die mechanisch weniger belastet werden. Auf diese Weise können sowohl der Wärmedämmwert der Platte erhöht, als auch das Gewicht der Platte gesenkt werden. Gleichzeitig kann dadurch die Menge des zur Herstellung benötigten PET-Rohmaterials gesenkt werden.

Eine mögliche erfindungsgemässe Verbundwerkstoffplatte kann mit anderen Worten auch wie folgt beschrieben werden:

Es wird eine Verbundwerkstoffplatte für den Einsatz als Rahmenverbreiterung an Bauelementen oder als Fassadenplatte vorgeschlagen, die aus einem PET-Wärmedämmschaumkern und Deckschichten aus vorwiegend PVC besteht und mittels vernetzendem Schmelzklebstoff in einem kontinuierlichen Verfahren hergestellt wird. Die Verbindung der Platte mit den anschliessenden Bauelementen kann bei der vorgeschlagenen Verbundwerkstoffplatte über eine Profil-Pressverbindung hergestellt werden. Im Weiteren ist der Einsatz der Verbundwerkstoffplatte als Leichtbauplatte im Innen- sowie Aussenbereich vorgesehen.

Bei einer Verbundwerkstoffplatte zur Herstellung von Rahmenverbreiterungen an Fenstern und Türen umfassend einen Kern sowie wenigstens eine erste Deckschicht auf einer ersten Seite und eine zweite Deckschicht auf einer zweiten Seite ist es erfindungsgemäss vorgesehen, dass der Kern eine weitgehend geschlossenzellige Polyethylenterephthalat-Schaumplatte ist.

In einer Ausführungsform bestehen mindestens zwei Deckschichten aus PVC oder Aluminium, so dass die Oberfläche der Verbundwerkstoffplatte jener der angeschlossenen Bauelemente entspricht.

In einer weiteren Ausführungsform besteht wenigstens eine Deckschicht aus mehreren funktionalen Schichten, die aus der Gruppe bestehend aus Polyvinylchlorid (PVC), Aluminium, Metall, Furnier, insbesondere Holz-Furnier, Bambus-Furnier, Mitteldichte Faserplatte, Spanplatte, Mehrschichtholzplatte, Stein-Furnier, Massivholz, kohlefaserverstärkter Kunststoff (CFK), Glas oder deren Kombinationen ausgewählt werden.

In einer Ausführungsform weist die weitgehend geschlossenzellige Polyethylenterephthalat-Schaumplatte eine Dichte von zwischen 40 und 100 kg/m3 auf, wodurch besonders gute Dämmeigenschaften erreicht werden können.

In einer Ausführungsform weist die weitgehend geschlossenzellige Polyethylenterephthalat-Schaumplatte eine Dicke von zwischen 10 und 100 mm auf, wodurch ebenfalls besonders gute Dämmeigenschaften erreicht werden.

In einer Ausführungsform ist die weitgehend geschlossenzellige Polyethylenterephthalat-Schaumplatte aus einer Mehrzahl von Schichten aufgebaut, von denen wenigstens eine Schicht eine von den anderen Schichten abweichende Dichte aufweist. Auf diese Weise können mechanisch stärker belastete Regionen des Kerns der Verbundwerkstoffplatte lokal verstärkt werden.

In einer Ausführungsform befindet sich zwischen dem Kern und einer Deckschicht auf der ersten Seite und/oder einer Deckschicht auf der zweiten Seite wenigstens eine zusätzliche funktionale Schicht, die aus der Gruppe bestehend aus schalldämmende Schicht aus massereichem Material, insbesondere Schwerfolie, einbruchhemmende Aluminiumplatte, einbruchhemmende Stahlplatte oder deren Kombinationen ausgewählt wird. Eine Verbundwerkstoffplatte in dieser Ausführungsform kann so auf eine effiziente Weise einbruchhemmende sowie wärme- und schalldämmende Funktionen erfüllen.

In einer Ausführungsform weist die Verbundwerkstoffplatte auf wenigstens einer Stirnfläche eine Profilierung auf, über welche sie mittels Pressverbindung und/oder Steckverbindung in Wirkverbindung mit einem Bauelement und/oder einem Baukörper gebracht werden kann. Eine solche Verbundwerkstoffplatte kann so kostengünstig ohne weitere Verbindungsmittel an Bauelemente und Baukörper angeschlossen werden.

In einer Ausführungsform wird die Verbundwerkstoffplatte mittels unmittelbar in der Platte aus Polyethylenterephthalat-Hartschaum verankerte Schrauben in Wirkverbindung mit einem Bauelement und/oder einem Baukörper gebracht. Durch den Verzicht auf die bei Verbundwerkstoffplatten aus dem Stand der Technik notwendigen Einleimer kann die Wärmedämmung der Verbundwerkstoffplatte erhöht und die Montage der erheblich vereinfacht werden.

Die Verbundwerkstoffplatte kann ebenso zur Herstellung von Leichtbauplatten im Innenbereich und Aussenbereich, insbesondere für Türen, Trennwände, Aussenwände, Tischblätter und Tablare verwendet werden.

Ein erfindungsgemässes Herstellungsverfahren für eine Verbundwerkstoffplatte weist folgende Verfahrensschritte auf:
(a) Bereitstellen einer Polyethylenterephthalat-Schaumplatte;
(b) Aufbringen wenigstens einer Klebstoffschicht;
(c) Aufbringen wenigstens einer funktionalen Schicht auf die Klebstoffschicht;
(d) Verpressen der Schichten durch einen kontinuierlicher Pressvorgang mittels Rollpressen und/oder einem folgenden Flachpressvorgang;
(e) Wiederholen der Schritte (b), (c) und (d), bis alle funktionalen Schichten aufgebracht sind.

In einer Variante wird die Dicke und/oder Oberflächenbeschaffenheit der Polyethylenterephthalat-Schaumplatte vor dem Verfahrenschritt (a) mittels eines Schliffes kalibriert. Auf diese Weise können Platten mit besonders konstant guten Materialeigenschaften und Dimensionen hergestellt werden und die Gefahr einer Delamination der Platte erheblich reduziert werden.

In einer Variante wird die Klebstoffschicht mittels Rollenbeleimung, auch Walzenbeleimung, aufgebracht. Auf diese Weise kann die Klebstoffschicht auf besonders effiziente Weise aufgetragen werden, wodurch die Herstellungskosten gesenkt werden können. Ebenso können dadurch besonders gleichmässige Klebstoffschichten hergestellt werden, wodurch Platten mit gut reproduzierbaren vorteilhaften Eigenschaften hergestellt werden können

In einer Variante wird eine Klebstoffauftragsmenge zwischen 70 und 200 g/m² aufgetragen, wodurch eine optimale Haftung zwischen den einzelnen Schichten der Verbundwerkstoffplatte erzielt werden kann.

In einer Variante besteht die Klebstoffschicht aus einem nachvernetzenden Schmelzklebstoff besteht, der bei einer Temperatur zwischen 100 und 160 Grad Celsius aufgetragen wird. Auf diese Weise können die Taktzeiten in den verwendeten Pressen reduziert werden, ohne dass die Massgenauigkeit der hergestellten Verbundwerkstoffplatte negativ beeinträchtigt wird.

### KURZE BESCHREIBUNG DER ZEICHNUNGEN

Vorteilhafte Ausführungen der Erfindung sind in den anliegenden Zeichnungen dargestellt und werden nachfolgend beschrieben. Es zeigen:
- Fig. 1:: Eine erste Ausführungsform einer erfindungsgemässen Verbundwerkstoffplatte.
- Fig. 2:: Eine zweite Ausführungsform einer erfindungsgemässen Verbundwerkstoffplatte.
- Fig. 3:: Eine dritte Ausführungsform einer erfindungsgemässen Verbundwerkstoffplatte.
- Fig. 4:: Eine erste Ausführungsform eines Anschlusses einer erfindungsgemässen Verbundwerkstoffplatte an ein Bauelement.
- Fig. 5:: Eine zweite Ausführungsform eines Anschlusses einer erfindungsgemässen Verbundwerkstoffplatte an ein Bauelement.

### BESCHREIBUNG BEVORZUGTER AUSFÜHRUNGSFORMEN

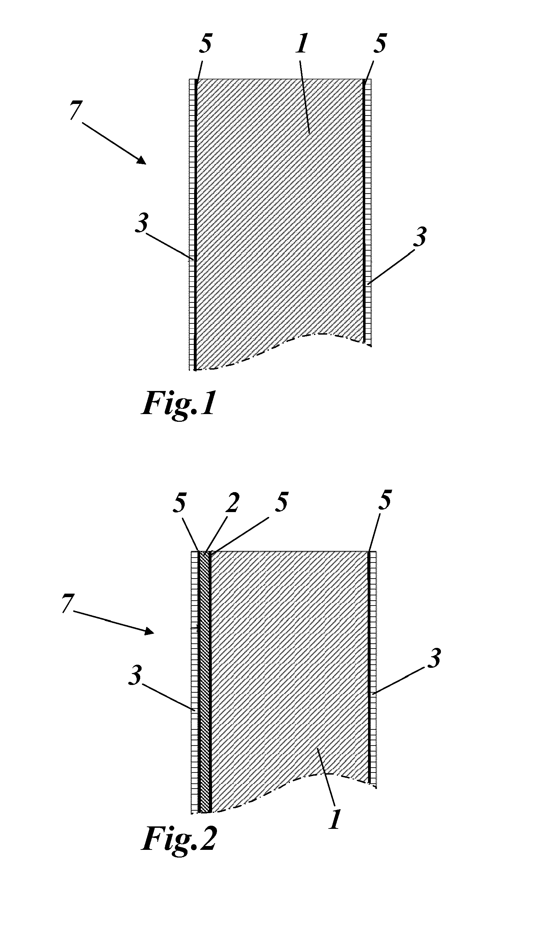

Fig. 1 zeigt eine erste Ausführungsform einer erfindungsgemässen Verbundwerkstoffplatte (7) bei der ein PET-Schaumstoffkern (1) mittels PUR-Schmelzklebstoff (5) beidseitig mit einer PVC-Platte (3) beschichtet ist. Diese Verbundwerkstoffplatte erreicht bei gegebener Dicke eine maximale Wärmedämmung. Fig. 1 zeigt also eine Verbundwerkstoffplatte aus PET-Dämmschaum und PVC-Deckschichten.

Fig. 2 zeigt eine zweite Ausführungsform einer erfindungsgemässen Verbundwerkstoffplatte (7) bei der ein PET-Schaumstoffkern (1) mittels PUR-Schmelzklebstoff (5) einseitig mit einer Schwerfolie (2) zur Schalldämmung und beidseitig mir einer PVC-Platte (3) beschichtet ist. Diese Verbundwerkstoffplatte gestattet die Einstellung eines Optimums zwischen Schall- und Wärmedämmung. Ein solches Optimum kann beispielsweise vom Verwendungszweck der Verbundwerkstoffplatte abhängig sein, insbesondere den klimatischen Verhältnissen und Lärmimmissionen an deren Einsatzort. Fig. 2 zeigt also eine Verbundwerkstoffplatte aus PET-Dämmschaum mit einseitiger Schalldämmfolie und PVC-Deckschichten.

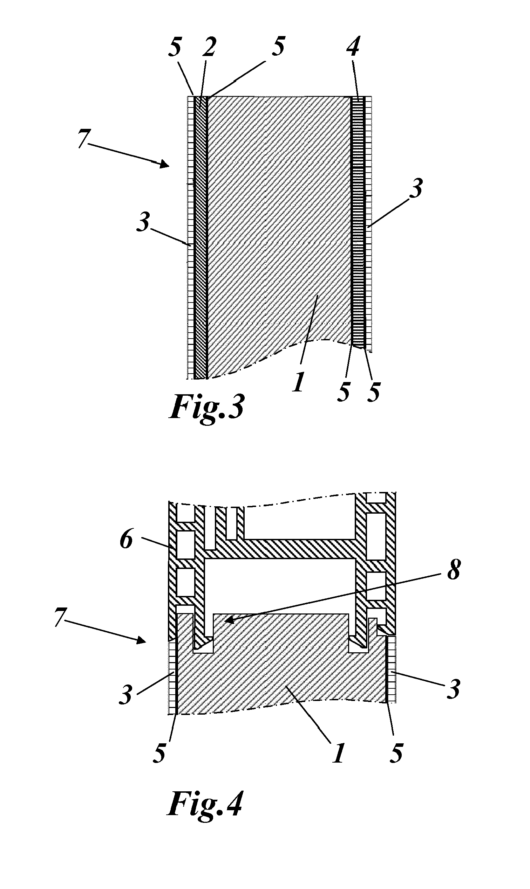

Fig. 3 zeigt eine dritte Ausführungsform einer erfindungsgemässen Verbundwerkstoffplatte (7) bei der ein PET-Schaumstoffkern (1) mittels PUR-Schmelzklebstoff (5) einseitig mit einer Schwerfolie (2) zur Schalldämmung, zusätzlich einseitig mit einer Aluminiumplatte (4) zur Einbruchshemmung und beidseitig mit einer PVC-Platte (3) beschichtet ist. Diese Verbundwerkstoffplatte erreicht eine kombinierte Funktion aus Einbruchshemmung, Schall- und Wärmedämmung. Mit einer solchen Platte können Wärme- und Schalldämmung sowie eine zusätzliche Einbruchshemmung bei vorgegebener Plattendicke für einen bestimmten Verwendungszweck durch die jeweiligen Dicken der funktionellen Schichten optimiert eingestellt werden. Fig.3 zeigt also eine Verbundwerkstoffplatte aus PET-Dämmschaum mit einseitiger Schalldämmfolie, Aluminiumschicht und PVC-Deckschichten.

Fig. 4 zeigt eine Möglichkeit eines Anschlusses der Verbundwerkstoffplatte (7) an bestehende Konstruktionen von Bauelementen (6) durch eine Steckverbindung, die durch ein Fräsprofil mit Übermass an dem PET-Kern (1) der Verbundwerkstoffplatte hergestellt wurde, wodurch in vielen Fällen weitere Verbindungselemente wie Schrauben o.ä. eingespart werden können. Fig. 4 zeigt also einen Anschluss einer Verbundwerkstoffplatte aus PET-Dämmschaum und PVC-Deckschichten an ein Bauelement (Fenster) durch profilgefrästen Steckanschluss (8).

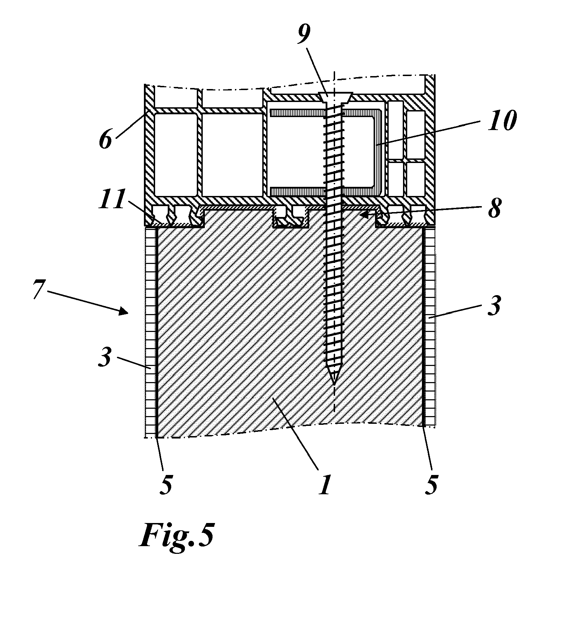

Fig. 5 zeigt eine Möglichkeit eines Anschlusses einer Verbundwerkstoffplatte (7) an eine bestehende Konstruktion eines Bauelements (6) mit unmittelbarer Verankerung einer Montageschraube (9) im Kern aus einer PET-Schaumplatte (1). Die Schmalseite der Verbundwerkstoffplatte verfügt über ein Fräsprofil (8) sowie eine Klebstoffschicht (11), wodurch zum Bauelement ein dampfdichter Anschluss erzeugt wird.

Alle Zeichnungen stellen jeweils Schnitte dar und sind schematisch, sowie die beanspruchte Erfindung nicht eingrenzend zu verstehen. Insbesondere können also keine genauen Grössenverhältnisse aus den Zeichnungen abgeleitet werden.

Weitere bevorzugte Ausführungsformen der Erfindung sind zudem:

Eine Verbundwerkstoffplatte zur Herstellung von Rahmenverbreiterungen an Fenstern und Türen wobei die Platte aus einem Kern aus einer weitgehend geschlossenzelligen PET-Schaumplatte o.ä. und mindestens zwei Deckschichten aus PVC oder Aluminium besteht.

Eine Verbundwerkstoffplatte zur Herstellung von Leichtbauplatten im Innen- und Aussenbereich wie z.B. Türen Trennwände, Tischblätter, Tablare o.ä.

Weitere bevorzugte Ausführungsformen einer erfindungsgemässen Verbundwerkstoffplatte können einzelne oder Kombinationen mehrerer der folgenden Merkmale aufweisen:
- Zwischen dem PET-Wärmedämmkern und den Deckschichten sind zusätzliche Funktionsschichten in Form von mindestens einer Schwerfolie als Schalldämmschichten angeordnet.
- Zwischen dem PET-Wärmedämmkern und den Deckschichten sind zusätzliche Funktionsschichten in Form von mindestens einer Aluminium- oder Stahlplatte als Einbruchshemmung angeordnet.
- Die Herstellung der Platten erfolgt durch Verklebung mittels nachvernetzenden Schmelzklebstoffen.
- Bei der Herstellung der Verbundwerkstoffplatte erfolgt vor dem Verpressen eine Kalibrierung des Wärmedämmkerns.
- Bei der Herstellung der Verbundwerkstoffplatte erfolgt nach einem ersten Füge-/Pressprozess ein Flachpressvorgang.
- Der Anschluss der Verbundwerkstoffplatte an Bauelemente oder Baukörper erfolgt über spanend hergestellte Profile mittels Presspassung zu den Anschlusskörpern.
- Die Verbundwerkstoffplatte wird zusätzlich mit dekorativen Schichten wie Furnier oder ähnlichem verklebt.
- Zum Verschrauben der Wärmeschutzplatte mit einem Bauelement (Fenster) sind keine zusätzlichen Einleimer notwendig.

Vorteilhafte Anwendungen wären die Verbreiterung von Fenster- und Türelementen in der Fassade. Mit den erfindungsgemässen Wärmeschutzplatten können auch grössere Abstände zwischen Bauelementen und der Bauhülle entsprechend verschiedenen Anforderungen an Wärme- und Schalldämmung ausgefüllt werden.

Weitere Anwendungen liegen bei Innenwänden, die hohen Klimaunterschieden ausgesetzt sind, z.B. die Abtrennung von Nassräumen und Trockenräumen in Gebäuden mit Leichtbaucharakter.

Weitere Anwendungen liegen bei der Konstruktion von Aussenwandbereichen, die in Leichtbaukonstruktion ausgeführt werden.

Im Innenausbau kann die Verbundwerkstoffplatte als Leichtbauplatte für z.B. Türen, Trennwände, Tischblätter, Tablare etc. eingesetzt werden.

### BEZUGSZEICHENLISTE

- 1: PET-Dämmschaum
- 2: Schwerfolie
- 3: PVC-Platte
- 4: Aluminiumplatte
- 5: Schmelzklebstoffschicht
- 6: Anschlussprofil
- 7: Verbundwerkstoffplatte
- 8: Profilierung
- 9: Montageschraube
- 10: Verstärkungsprofil
- 11: Montagekleber

## Patentansprüche

1. Verbundwerkstoffplatte zur Herstellung von Rahmenverbreiterungen an Fenstern und Türen umfassend einen Kern sowie wenigstens eine erste Deckschicht auf einer ersten Seite und eine zweite Deckschicht auf einer zweiten Seite, **dadurch gekennzeichnet, dass** der Kern eine weitgehend geschlossenzellige Polyethylenterephthalat-Schaumplatte umfasst, wobei der Kern vorzugsweise eine weitgehend geschlossenzellige Polyethylenterephthalat-Schaumplatte ist.

2. Verbundwerkstoffplatte nach Anspruch 1, **dadurch gekennzeichnet, dass** mindestens zwei Deckschichten aus PVC und/oder Aluminium bestehen.

3. Verbundwerkstoffplatte nach Anspruch 1, **dadurch gekennzeichnet, dass** wenigstens eine Deckschicht aus mehreren funktionalen Schichten besteht, die ausgewählt werden aus der Gruppe bestehend aus Polyvinylchlorid (PVC), Aluminium, Metall, Furnier, insbesondere Holz-Furnier, Bambus-Furnier, Mitteldichte Faserplatte, Spanplatte, Mehrschichtholzplatte, Stein-Furnier, Massivholz, kohlefaserverstärkter Kunststoff (CFK), Glas oder deren Kombinationen.

4. Verbundwerkstoffplatte nach einem der Ansprüche 1 bis 3, **dadurch gekennzeichnet, dass** die weitgehend geschlossenzellige Polyethylenterephthalat-Schaumplatte eine Dichte von zwischen 40 und 100 kg/m³ aufweist.

5. Verbundwerkstoffplatte nach einem der Ansprüche 1 bis 4, **dadurch gekennzeichnet, dass** die weitgehend geschlossenzellige Polyethylenterephthalat-Schaumplatte eine Dicke von zwischen 10 und 100 mm, vorzugsweise zwischen 40 und 100 mm aufweist.

6. Verbundwerkstoffplatte nach einem der Ansprüche 1 bis 5, **dadurch gekennzeichnet, dass** die weitgehend geschlossenzellige Polyethylenterephthalat-Schaumplatte aus einer Mehrzahl von Schichten aufgebaut ist, von denen wenigstens eine Schicht eine von den anderen Schichten abweichende Dichte aufweist.

7. Verbundwerkstoffplatte gemäss wenigstens einem der Ansprüche 1 bis 6, **dadurch gekennzeichnet, dass** sich zwischen dem Kern und einer Deckschicht auf der ersten Seite und/oder einer Deckschicht auf der zweiten Seite wenigstens eine zusätzliche funktionale Schicht befindet, ausgewählt aus der Gruppe bestehend aus schalldämmende Schicht aus massereichem Material, insbesondere Schwerfolie, einbruchhemmende Aluminiumplatte, einbruchhemmende Stahlplatte oder deren Kombinationen.

8. Verbundwerkstoffplatte gemäss einem der Ansprüche 1 bis 7, **dadurch gekennzeichnet, dass** die Verbundwerkstoffplatte auf wenigstens einer Stirnfläche eine Profilierung aufweist, über welche sie mittels Pressverbindung und/oder Steckverbindung in Wirkverbindung mit einem Bauelement und/oder einem Baukörper gebracht werden kann.

9. Verbundwerkstoffplatte gemäss einem der Ansprüche 1 bis 8, **dadurch gekennzeichnet, dass** sie über unmittelbar in der Platte aus Polyethylenterephthalat-Hartschaum verankerte Schrauben in Wirkverbindung mit einem Bauelement und/oder einem Baukörper gebracht wird.

10. Verwendung einer Verbundwerkstoffplatte gemäss einem der Ansprüche 1 bis 9 zur Herstellung von Leichtbauplatten im Innenbereich und Aussenbereich, insbesondere für Türen, Trennwände, Aussenwände, Tischblätter und Tablare.

11. Verfahren zur Herstellung einer Verbundwerkstoffplatte, wie in einem der Ansprüche 1 bis 9 beansprucht, das die Verfahrensschritte umfasst:
a) Bereitstellen einer Polyethylenterephthalat-Schaumplatte;
b) Aufbringen wenigstens einer Klebstoffschicht;
c) Aufbringen wenigstens einer funktionalen Schicht auf die Klebstoffschicht;
d) Verpressen der Schichten durch einen kontinuierlicher Pressvorgang mittels Rollpressen und/oder einem folgenden Flachpressvorgang;
e) Wiederholen der Schritte b), c) und d), bis alle funktionalen Schichten aufgebracht sind.

12. Verfahren zur Herstellung einer Verbundwerkstoffplatte gemäss Anspruch 11, **dadurch gekennzeichnet, dass** die Dicke und/oder Oberflächenbeschaffenheit der Polyethylenterephthalat-Schaumplatte vor dem Verfahrenschritt a) mittels eines Schliffes kalibriert wird.

13. Verfahren zur Herstellung einer Verbundwerkstoffplatte gemäss einem der Ansprüche 11 oder 12, **dadurch gekennzeichnet, dass** die Klebstoffschicht mittels Rollenbeleimung aufgebracht wird.

14. Verfahren zur Herstellung einer Verbundwerkstoffplatte gemäss einem der Ansprüche 11 bis 13, **dadurch gekennzeichnet, dass** die Klebstoffschicht eine Klebstoffauftragsmenge zwischen 70 und 200 g/m² aufweist.

15. Verfahren zur Herstellung einer Verbundwerkstoffplatte gemäss einem der Ansprüche 11 bis 14, **dadurch gekennzeichnet, dass** die Klebstoffschicht aus einem nachvernetzenden Schmelzklebstoff besteht, der bei einer Temperatur zwischen 100 und 160 Grad Celsius aufgetragen wird.
